(19) Europäisches Patentamt
European Patent Office
Office européen des brevets

(11) **EP 3 572 986 A1**

(12) **EUROPEAN PATENT APPLICATION**

(43) Date of publication:
**27.11.2019 Bulletin 2019/48**

(51) Int Cl.:
***G06N 5/02*** (2006.01)    ***G06K 7/10*** (2006.01)

(21) Application number: **18173889.9**

(22) Date of filing: **23.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
• **Akata, Zeynep**
**1096 GJ Amsterdam (NL)**
• **Gemici, Mevlana**
**1098XK Amsterdam (NL)**
• **Welling, Max**
**1402GN Bussum (NL)**

Remarks:
Amended claims in accordance with Rule 137(2) EPC.

(54)    **IMPROVING THE TRAINING OF ARTIFICIAL INTELLIGENCE MODULES FOR USE IN VEHICLES**

(57)    A generating system (1) for augmenting a set $P_D$ of physical training data for an artificial intelligence module (54) in vehicle (50) and for verifying that training data used to train artificial intelligence module (54) is appropriate for the actual environment and/or state in which vehicle (50) is operating, comprising:
• a trainable encoder module Q, configured to map a record x sampled from the training data $P_D$ in space X to space Z to produce a record Q(x) in Z;
• a trainable decoder module G, configured to map a record z sampled from the space Z back to space X to produce a record G(z) in X; and
• a trainable critic module F, configured to classify whether a record $\tilde{x}$ sampled from space X belongs to the set $P_D$ of physical training data or whether that record $\tilde{x}$ is a record G(z) generated by the decoder module G.

Fig. 2

## Description

The invention relates to the training of artificial intelligence modules for use in vehicle control and/or assistance systems under the constraint that only a limited set of physical training data is available.

Background

For a vehicle to participate in road traffic in an at least partially automated manner, it is necessary to sense the environment of the vehicle, obtain a representation of this environment and locate the position of the vehicle. This information is needed to take corrective action in case there is a danger of a collision between the vehicle and another object in the environment of the vehicle.

The sensing of the environment is performed by sensors that produce physical measurement data. The quantity and dimensionality of this data is very large. In order to reduce this dimensionality towards a classification which objects or situations are present in the environment of the vehicle, artificial intelligence modules are used.

For example, US 8,682,821 B2 discloses to classify radar signals by machine learning in order to determine whether they originate from the movement of certain objects and/or animals.

To train an artificial intelligence module, the module is fed with a set of training data, and for each record in the set of training data, it is determined whether the outcome of the module matches the "ground truth" corresponding to that record.

During training, the internal processing of the module is optimized so that, over the set of all training data, the outcome of the module best matches the corresponding "ground truth".

Disclosure of the invention

The inventors have developed a generating system for augmenting a set $P_D$ of physical training data for an artificial intelligence module in a vehicle and for verifying that training data used to train the artificial intelligence module is appropriate for the actual environment and/or state in which the vehicle is operating. The artificial intelligence module may, for example, be a neural network.

The physical training data live in a space X. For example, if the physical training data consists of images from a camera that have a given width and height in pixels and a color depth of a given number of bits per pixel, then these images live in the space X of all possible images having this width, height and color depth. The set $P_D$ of physical training data, e.g., a collection of training images, is thus a set of records, each of which lives in the space X, so the set $P_D$ as a whole is a subset within the space X.

The system comprises an encoder module Q that is configured to map a record x sampled from the training data $P_D$ in the space X in which the training data $P_D$ was physically acquired to a latent space Z that is of lower dimensionality than the space X to produce a record Q(x) in Z.

The system further comprises a decoder module G, configured to map a record z sampled from the space Z back to the space X to produce a record G(z) in X. The decoder module G is deterministic. The distribution $P_G$ of all records G(z) created from a record z in Z defines how likely it is that a record in X can be produced by the generative model embodied in G. As it will be explained below, the space Z comprises, or is even defined by, a given prior distribution $P_Z$ in Z. Therefore, even though G is deterministic when applied to any single record z in Z, applying G to all z in Z produces a distribution in X.

The system further comprises a critic module F that is trainable or trained with the objective of most accurately classifying whether a record $\tilde{x}$ sampled from space X belongs to the set $P_D$ of physical training data or whether that record $\tilde{x}$ is a record G(z) generated by the decoder module G from a sample z in Z.

For example, the critic module F may work as a function that assigns a real-valued potential F(x) to every record x in space X, which includes both records in the original set $P_D$ of training data and newly generated records G(z).

The encoder module Q is trainable or trained with the objective that the distribution $P_Q$ of all generable records Q(x) in Z most closely resembles a given prior distribution $P_Z$ in Z, and the distribution of all back-mappable records G(z) that result from back-mapping records z from Z back to space X most closely resembles the distribution of the set $P_D$ of the physical training data in X, for a fixed candidate decoder G.

The prior distribution $P_Z$ for latent codes is typically a simple multi-dimensional distribution, e.g., a multivariate Gaussian. The dimensionality of the space Z is typically much lower than the dimensionality of the space X.

The decoder module G is trainable or trained with the objective that the critic module F is least able to distinguish whether a record $\tilde{x}$ sampled in X belongs to the training data $P_D$ or whether that record $\tilde{x}$ is a record G(z) generated by the decoder module G.

In the fully trained state of the system, the decoder module G can be used to augment the set $P_D$ of physical training data for further use in an artificial intelligence module in the vehicle. By sampling a random record z in the lower-dimensional space Z and applying the decoder module G to that record z, a new sample G(z) of training data may be directly obtained. The effect of the training of the modules in the system is that the so-created new samples G(z) are not mere copies of the samples in the original set $P_D$. Rather, the new samples G(z) capture the most important concepts in that set $P_D$, and reproduce all sensible variations and rearrangement of such concepts.

The technical reason for producing such new samples G(z) in the first place is that for many applications of artificial intelligence modules in vehicles, training data that are labelled with a "ground truth" for the training of the artificial intelligence modules are a scarce and expensive resource. For example, in a main use case where the artificial intelligence module is to classify camera or other images as to whether they contain certain objects or situations, a large number of images needs to be manually labelled. By virtue of the objective with which the decoder module G was trained, namely making the newly generated samples harder to distinguish from the original samples in the set $P_D$, the newly generated samples G(z) "blend in" with the original samples in the set $P_D$: for the intended purpose of training the artificial intelligence module, they can be used in lieu of further physically acquired and manually labelled samples. So in the end, the training of the artificial intelligence module can be accomplished with a smaller set $P_D$ of training data, thus faster and at a lower cost.

The combination of the critic module F, the encoder module Q and the decoder module G, which are all trained according to different but interrelated objectives, has several marked advantages.

Most importantly, the probability density distribution of the generated records G(z) in the higher-dimensional space X more accurately resembles the probability density distribution of the training data in the original set $P_D$. Therefore, the full variability of the distribution of the original set $P_D$ is preserved. The distribution of the generated records G(z) does not "mode collapse" to a few realistic modes.

This is particularly important for applications of artificial intelligence modules in vehicles. For example, if the task of the artificial intelligence module is to classify acquired images as to which traffic signs they contain and an original set $P_D$ of training images is augmented with new samples from a generator that suffers from "mode collapse", a tendency may emerge that traffic signs that occur quite frequently in the original set $P_D$ of training images (such as a "yield" sign, a "stop" sign, or a speed limit sign) become over-represented in the newly generated samples to a point that infrequently occurring traffic signs, such as a quayside or river bank warning sign, or a railway crossing warning sign, are eventually "crowded out" and their detection suffers. This may have dire consequences when the vehicle is moving in an at least partially automated manner.

The problem of "mode collapse" is exacerbated in a case where images of whole "realistic" street scenes are to be generated in order to augment an original set $P_D$ of training images for training the artificial intelligence module. For example, the original set $P_D$ may comprise training images where the roads or the environment look the same all the time, the pedestrians all look similar, the sky is always bright, or many cars have the same type or color. If the generator suffers from "mode collapse", the variability of the real world will then not be reflected in the

The training of the system as a whole is stabilized. When training or optimizing for one objective, there is always the possibility that this worsens some other aspect that is not part of the objective. The presence of three different but interrelated objectives counteracts this tendency. This reduces training time and the need to manually intervene when setting hyperparameters.

Although all distributions are learned based on a finite number of training samples, they may extend to an infinite number of further samples while preserving the basic concepts captured from the original training samples. Therefore, the properties of the learned model of the training data are not only valid for the original training samples, but also generalize to new test data.

The system contains two "adversaries", namely the critic module F that is optimized to distinguish the newly generated samples G(z) from the original physical training data on the one hand, and the decoder module G that is optimized to make the newly generated samples G(z) indistinguishable from the original physical training data. This competition ensures that the generated samples G(z) are realistic. For example, if the samples G(z) are images, a blurring observed with other generative models is avoided. At the same time, as presented above, mode collapse and training instabilities that may occur particularly in adversarial generative models are avoided.

Furthermore, the structure of the physical training data that emerges after mapping into latent space Z is interpretable on its own, and this interpretation is easier than a direct interpretation of the original data because of the lower dimensionality. For example, in the fully trained state of the system, a new physically acquired record of data in space X may be mapped into space Z by applying the encoder module Q to it. If the result Q(x) in Z is an outlier with respect to the set $Q(P_D)$ of records in Z generated by applying the encoder module Q to the training data $P_D$, this may be evaluated to mean that the original set $P_D$ of physical training data is inappropriate to describe the situation in which the vehicle is operating.

This aspect is particularly relevant for applications in vehicles. A vehicle is typically produced to be operated in a certain geographic area, e.g., Europe. Returning to the already mentioned example of a traffic sign detection, this will then be optimized for Europe as well. Also, the recognition of lanes for driving will be optimized for paved roads that are the standard in Europe. But when the vehicle is later exported, e.g., to North America or Australia, the road signage may be very different. Specifically, in these geographic areas, many road signs contain English text instead of pictograms. This includes safety-relevant signs, such as "Low Bridge Ahead" or "Very Steep Descent - Not suitable for Trucks". These signs may be ignored, or mistaken for something else. The test whether Q(x) in Z is an outlier may avoid this.

Therefore, in a particularly advantageous embodiment, the system further comprises an interface for reading in a record m of physical measurement data from a sensor that is configured to sense at least part of the environment of the vehicle, wherein the record m is in the same space X as the training data $P_D$. The system further comprises a verification module that is configured to: determine whether the record Q(m) in Z that is generated by applying the encoder module Q to m is an outlier with respect to the set $Q(P_D)$ of records in Z generated by applying the encoder module Q to the training data $P_D$, and if Q(m) is an outlier, determine that the training data $P_D$ is not appropriate for the actual environment and/or state in which the vehicle is operating. If Q(m) is not an outlier, it is instead determined that the training data $P_D$ is appropriate for the actual environment and/or state in which the vehicle is operating.

Herein, the term "state" refers to other anomalies in the vehicle operation that may also be detected in the same manner. For example, an outlier is also produced if a sensor has failed.

The verification module may reside on the same vehicle where the interface reads in physical measurement data from the sensor, but this is not required. Rather, it is also possible that the verification module resides, e.g., on a cloud server.

In a particularly advantageous embodiment, the encoder module Q is a probabilistic encoder that adds random noise to an otherwise deterministic mapping from x in X to Q(x) in Z. The goal of training the encoder module Q can then be formulated as finding Q so that its marginal is identical to the given prior $P_Z$.

In a further particular advantageous embodiment, the system further comprises a physical random number generator based on a source of electronic noise or radioactive decay. The outcome of the random number generator

- decides which record x is to be sampled from training data $P_D$ in X.
- decides which record $\tilde{x}$ is to be sampled from X,
- decides which record z is to be sampled from Z, and/or
- is used as random noise in the probabilistic encoder module Q.

This prevents any artifacts that may result from the use of pseudo-random number generators. Such artifacts might introduce errors that are hard to track down, e.g., because they only occur in situations where the entropy pool of the pseudo-random number generator runs low.

In a particularly advantageous embodiment, the encoder module Q is trainable or trained to minimize the Wasserstein distance between the distribution G(Q(x)) that results from back-mapping the generated records Q(x) back to space X and the distribution of the set $P_D$ of the physical training data in X. The Wasserstein distance formulates the distance as an optimal transport problem, i.e., it corresponds to the optimal "cost" of converting one of the two compared probability distributions into the other. There is no lower limit as to the dimensionality of the probability distributions, i.e., the Wasserstein distance is well-defined even for a comparison of two individual records. Therefore, in contrast to various divergences that are used as measures for distance, it is not a problem for the determination of the Wasserstein distance that the distributions involved are defined by finite sets of training samples.

In a particularly advantageous embodiment, the encoder module Q, the decoder module G, and/or the critic module F, comprises a deep neural network. Such a network has an internal processing chain that is parametrized by a set of weights. The weights may be optimized to find an extremum of a loss function, e.g., by a gradient descent method.

In a further particularly advantageous embodiment, the output of the critic module F is a bounded 1-Lipschitz function with respect to a given space X and a given metric d of X. The critic module F then fulfills the constraints resulting from the Kantorovich-Rubenstein duality for optimal transport, i.e., the optimal transport problem to find an "optimal coupling" connecting the distribution of generated samples G(z) and the distribution of the original training data $P_D$ may then be reformulated in terms of finding an optimal critic module F.

In particular, F being a bounded 1-Lipschitz function may be formulated as $\|F\|_L \leq 1$, wherein

$$\|F\|_L = \sup_{x,y \in X} \frac{\|F(y) - F(x)\|}{d(x,y)}.$$

During the training process, regularization terms ensure that these constraints are always fulfilled, or close to being fulfilled. When training F, the goal is to find an F that has the properties of an optimal Kantorovich potential, which means that F(x)-F(y)=d(x, y) holds almost everywhere on the support of an optimal coupling between the distribution of the original training data $P_D$ and the distribution of generated samples G(z).

As presented in examples before, the system is intended to improve the training of artificial intelligence modules for use in vehicles. Therefore, the invention also relates to a control system and/or assistance system for a vehicle, comprising

- at least one sensor that is configured to sense at least part of the environment of the vehicle,
- at least one artificial intelligence module that is configured to infer, from the physical measurement data captured by the sensor, a condition that necessitates a change to the trajectory of the vehicle in order to avert adverse consequences from the vehicle, its driver and/or other entities, and
- an actuation module that is configured to, in response to determining that the condition is present in the physical measurement data, actuate a power train, a steering system, and/or a braking system of the vehicle, and/or cause a warning device to emit a physical warning signal that is perceptible by the driver of the vehicle,
- wherein the artificial intelligence module is trainable or trained with training data that are at least partially generated by the generating system provided by the invention.

As presented above, the use of the generating system provided by the invention has the advantage that a better-quality training of the artificial intelligence module, and thus a better and more reliable response of the vehicle to real traffic situations, can be achieved even if only a limited set $P_D$ of physical training data is available.

Specifically, the creation of additional training samples may improve the detection of "corner cases", i.e., of situations that occur rarely but are very important to detect if they do occur. As presented above, a simple example for this is the occurrence of a rare but important traffic sign that warns of a safety hazard.

In a particularly advantageous embodiment, the control system and/or assistance system is communicatively coupled with the generating system and configured to, in response to a determination by the generating system that the training data $P_D$ with which the artificial intelligence module has been trained is not appropriate for the actual environment and/or state in which the vehicle is operating: cause a warning device to emit a physical warning signal that is perceptible by the driver of the vehicle, and/or cause deactivation of the control system and/or assistance system.

The generating system may reside in the same vehicle that also carries the control system and/or assistance system, but this is not so limited. Rather, the generating system may, for example, reside in a cloud, and/or in the sphere of the manufacturer of the vehicle or of the control system and/or assistance system. For example, physical measurement data, such as images, may be transmitted to the generating system at specific intervals and used to verify whether these data are still compatible with the training data $P_D$ with which the control system and/or assistance system was originally trained.

Any sensor suitable for sensing at least part of the environment of the vehicle may be used in the context of the control system and/or assistance system, including but not limited to cameras for visible or invisible light, radar sensors, or LIDAR sensors.

The invention also provides a method for manufacturing the generating system provided by the instant invention. The method comprising the steps of:

- training the encoder module Q given a fixed candidate decoder module G;
- training the critic module F based on the training state of the encoder module Q obtained in the training of the encoder module Q;
- training the decoder module G based on the training state of the critic module F obtained in the training of the critic module F; and
- branching back to the training of the encoder module Q unless a predetermined number of iterations is reached or a predetermined quality criterion for the training is fulfilled.

For the reasons presented above, alternating between the three different but interrelated objectives of the training results in a combination of an encoder module Q, a critic module F, and a decoder module G that provide the best trade-off between the three objectives. Specifically, a Pareto state may be attained, i.e., a state where it is no longer possible to improve one objective without worsening another.

As the generating system contains the critic module F and the decoder module G that can be regarded as adversaries, its functioning is similar to a generative adversarial network, GAN. If the Wasserstein distance is used to measure distances between probability distributions, then training the system boils down to solving the "optimal transport problem" between the distribution of the original training data $P_D$ and the distribution of the newly generated training samples G(z). "Optimal transport" refers to finding an "optimal transport plan" to move unit probability masses from one distribution to the other with minimal costs, and therefore estimates the similarity of the two distributions. The optimal transport problem can be formulated in its "primal" form as finding a distribution of generated samples y=G(z) that minimizes the expectancy

$$E_{x,y}\big[d(x,y)\big]$$

of the distance between such generated samples y and the original training samples x from the set $P_D$.

d(x,y) can be viewed as the cost of moving a unit of probability mass from x to y. This may, for example, correspond to the Euclidean metric ‖x-y‖. An "optimal coupling" can be seen as the transport plan with minimal costs to transform the distribution of the newly generated training samples G(z) into the distribution of the original training data $P_D$ or vice versa.

According to the Kantorovich-Rubenstein duality, the optimal transport problem may also be formulated in its "dual" form in terms of the critic module F. Training the decoder function based on the then-current training state of F can also be considered part of this "dual" problem.

Thus, the training alternates between solving the primal version and solving the dual version of the optimal transport problem.

In a particularly advantageous embodiment, the encoder module Q is trained based on an objective that comprises

- minimizing, over the set $P_D$ of training data and the set $Q(P_D)$ of records in Z generated by applying the encoder module Q to the training data $P_D$, the expectancy of the distance between records x in $P_D$ and records G(z) for z in $Q(P_D)$; and
- penalizing the divergence between the distribution $P_Q$ of all generated records Q(x) in Z and the given prior distribution $P_Z$ in Z with a weighted additive term.

For example, the optimal Q may be determined to be the Q minimizing

$$\inf_Q \left[ E_{x \in P_D, z \in Q(x)}\left[ d(x, G(z)) \right] + \gamma \cdot D(P_Q, P_Z) \right] . \qquad (5)$$

Herein, D is a divergence measure, E is the expectancy, and $\gamma$ is the weighting factor.

Directly solving the optimal transport problem in the space X is very challenging, and in particular the maintenance of the marginal constraints is difficult. Therefore, the problem is reparametrized, so that all calculations can be done in the lower-dimensional latent space Z. This utilizes the encoder module Q, which maps data records x into latent codes z=Q(x) in space Z, and induces a distribution $P_Q$ in Z. Since the decoder module G is a deterministic mapping into space X, the optimal transport problem can be reformulated to matching only $P_Q$ and the prior Pz in the lower-dimensional space Z, which then links $P_D$ and $P_G$=G(z). The penalized formulation of the optimal transport problem has the advantage that it is unconstrained and therefore more practical to solve.

The solution may, for example, be achieved by gradient descent on the parameters of the encoder Q, using a fixed value of the weighting factor $\gamma$ as regularization constant and keeping the decoder G fixed as well. This yields, as a result of the primal problem, an approximately optimal coupling $\pi$, which can be used to generate new samples in X according to the following process:

1. Sample a record x from the training data $P_D$;
2. Reconstruct this record by first mapping x to Q(x) in Z with the newly trained encoder, and then apply the fixed decoder G. This yields a coupled pair $(x,y) \in \pi$ where y=G(Q(x)).

Since the decoder G is fixed in this calculation, the primal step alone is not sufficient to learn a useful generative model. Rather, the subsequent dual steps of training the critic module F and finally training the decoder module G are needed.

In a further particularly advantageous embodiment, the critic module F is trained based on an objective that comprises maximizing the absolute difference between the expectancy of F(x) for x in $P_D$ and the expectancy of F(G(z)) for z in the given prior $P_Z$, i.e., find F that maximizes

$$\sup_F \left[ E_{x \in P_D}\left[ F(x) \right] - E_{z \in P_Z}\left[ F(G(z)) \right] \right].$$

The optimal F solved for in this manner is an optimal potential function, which assigns high values to samples concentrated on $P_D$ and low values for records concentrated on $P_G$.

In a further particularly advantageous embodiment, the objective for training the critic module F further comprises penalizing a deviation of the gradient of F from a uniform norm and direction on a connecting line between any two points x and G(Q(x)) in X. For example, the optimum F* of the critic module F may be written as

$$F^* = \arg\max_{F} E_{x \in P_D}\left[F(x)\right] - E_{z \in P_Z}\left[F(G(z))\right] - \lambda \cdot$$

$$\cdot E_{x \in P_D, t \in U(0,1)}\left\| \nabla F(t \cdot x + (1-t) \cdot G(Q(x))) - \frac{x - G(Q(x))}{\|x - G(Q(x))\|} \right\|^2$$

For a fixed constant $\lambda$ and fixed encoder Q from the solution of the primal problem, this can be optimized via gradient descent, using samples and their reconstructions from the latent variable model. Once an approximate optimal potential F* has been learned, it can be used as the new critic module F to find an improved decoder G as the final solution of the dual problem.

In a further particularly advantageous embodiment, the decoder module G is trained based on an objective that comprises minimizing the absolute difference between the expectancy between the expectancy of F(x) for x in $P_D$ and the expectancy of F(G(z)) for z in the given prior $P_Z$. For example, the optimum G* for the new decoder module may be written as:

$$G^* = \arg\min E_{x \in P_D}\left[F(x)\right] - E_{z \in P_Z}\left[F(G(z))\right].$$

Once again, this may be optimized via gradient descent, using a fixed F from the previous step.

The combination of the trained encoder and the trained decoder can be used to generate new synthetic samples, e.g., by sampling a random record x from the training data $P_D$, encoding this as Q(x) in Z, adding a noise vector $\varepsilon$ in Z from a distribution that was also used during training, and then mapping this back to space X by computing y=G(Q(x)+$\varepsilon$).

The system and method may be at least partially implemented in software that can, for example, be used to upgrade an existing system or vehicle, and is therefore a product having a value of its own. Therefore, the invention also provides a computer program with machine readable instructions that, when executed on a computer and/or on a control unit, upgrade the computer, and/or the control unit, to the generating system or control and/or assistance system provided by the invention, and/or cause the computer, and/or the control unit, to perform the method provided by the invention. The invention provides a non-transitory machine-readable storage medium or a download product with the computer program.

The generating system also has further applications beyond the originally intended field of training artificial intelligence modules for vehicles.

The system can be used to enhance recorded data, by adding in features that were missing during the recording but are characteristic for the expected data distribution. This includes applications such as in-painting (i.e., filling in missing regions in an image that were produces, e.g., due to sensor defects), or deocclusion when parts of an important object are hidden behind another object and complicate classification (e.g., a pedestrian hidden behind a vehicle). It can also be used to convert manual drawings into realistic images, e.g., to construct specific corner cases. The system may also be used to enhance the resolution of an image recorded with a lower-resolution sensor.

The system can be conditioned on other sensor inputs or abstract features, and can thus be used for multi-sensor fusion. For this application, the advantage of modelling all facets of the data distribution, rather than just a few modes (no "mode collapse"), is particularly attractive.

Latent codes of images can be used for more efficient image search, as the mapping to latent space Z corresponds to a drastic reduction in dimensionality. Similarly, latent codes may be used for lossy compression of images.

Further improvements of the invention are detailed in the following in combination with a description of preferred embodiments using Figures.

Preferred embodiments

The Figures show:

Figure 1 Exemplary embodiment of the system 1;

Figure 2 Exemplary illustration of the spaces X and Z and the mappings between these spaces;

Figure 3 Exemplary embodiment of the method 100;

Figure 4 Exemplary embodiment of a control system and/or assistance system 51 in a vehicle 50.

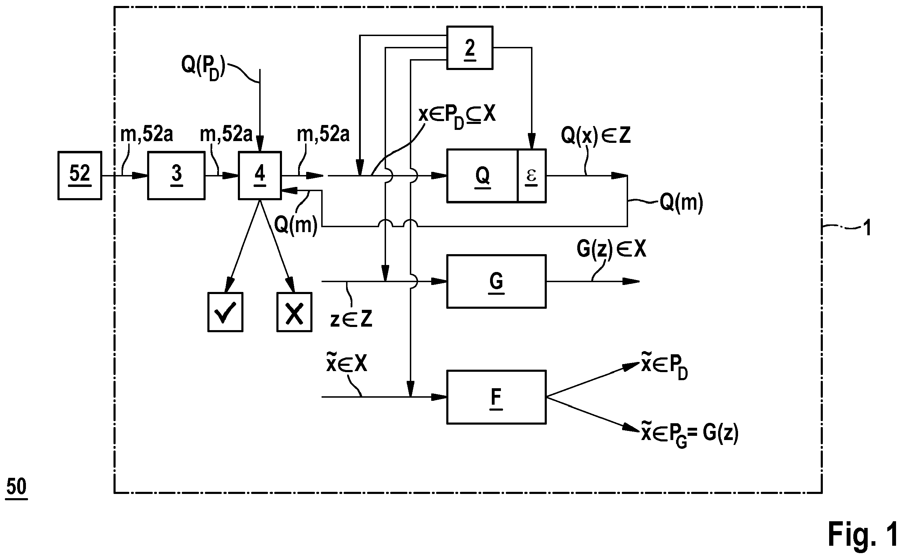

According to Figure 1, the system 1 comprises an encoder Q configured to map records x from a space X, where the training data $P_D$ live, to the latent space Z. This mapping is a probabilistic mapping that adds random noise $\varepsilon$ to its output.

The system 1 further comprises a decoder G configured to map records z from the space Z back to the space X, and a critic module F configured to classify whether a record $\tilde{x}$ sampled from X is part of the training data $P_D$ or whether this record $\tilde{x}$ is in the set $P_G$ made up from all possible mappings G(z).

A physical random number generator 2 is used to choose which record x is to be sampled from $P_D$, which record z is to be sampled from Z, and which record $\tilde{x}$ is to be sampled from X for the critic module F. This physical random number generator 2 is also used as a source of the random noise $\varepsilon$ in the probabilistic encoder Q.

The system 1 further comprises an interface 3 to read in a record m of physical measurement data 52a from a sensor 52 in a vehicle 50. A verification module feeds this record m into the encoder Q, thereby mapping it to Q(m) that lives in the space Z. The verification module 4 checks whether the record Q(m) is an outlier in Z with respect to the set $Q(P_D)$ of records that were mapped from $P_{D\subseteq}X$ into Z. If Q(m) is an outlier, it is determined that the training data $P_D$ is not appropriate for the actual environment and/or state in which the vehicle 50 is operating (symbol ✘ ). If Q(m) is not an outlier, it is determined that the training data $P_D$ is appropriate for the actual environment and/or state in which the vehicle 50 is operating (symbol ✓).

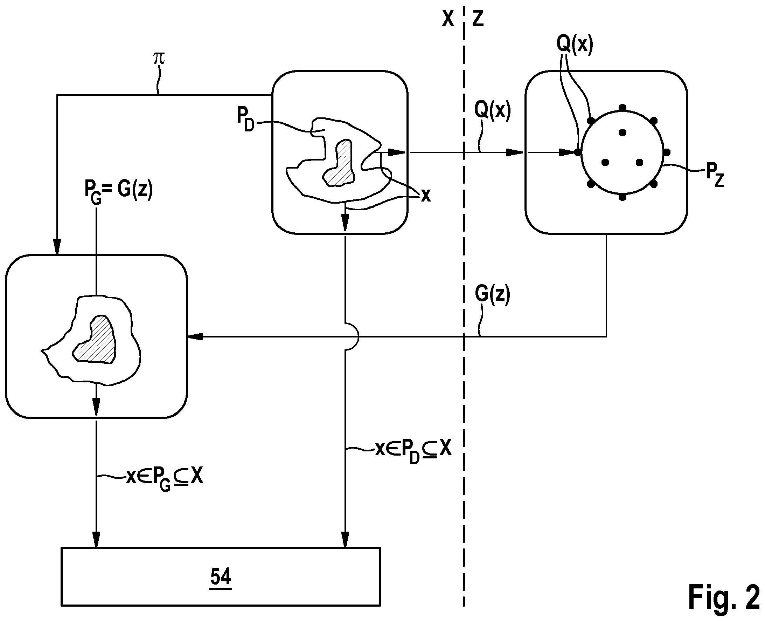

Figure 2 illustrates the spaces X and Z, the mappings between these spaces, and the interaction of the system 1 with the artificial intelligence module 54 in the vehicle 50 (not shown in Figure 2).

The encoder Q maps the training data $P_D$ that lives in space X to the space Z. This mapping is done in a manner that the distribution of the records Q(x) in Z matches a given prior distribution $P_Z$ in Z. In the illustration in Figure 2, $P_Z$ has the form of a spherical surface in space Z, and the records Q(x), of which only two are labelled for clarity, are points on that spherical surface.

The decoder G(z) maps a sample z from space Z back to space X. All possible such decodings G(z) make up the set $P_G$. By encoding a record x from $P_D$ to Q(x) in Z and then immediately re-decoding Q(x) as y=G(Q(x)), a coupled pair (x, y) is created that is part of the optimal coupling $\pi$ between $P_D$ and $P_G$.

The distribution of the decodings G(z) matches the distribution of the set $P_D$ of the physical training data. Therefore, when training data for the artificial intelligence module 54 is needed, the set of physical training data $P_D$ can be seamlessly augmented with newly generated samples from $P_G$.

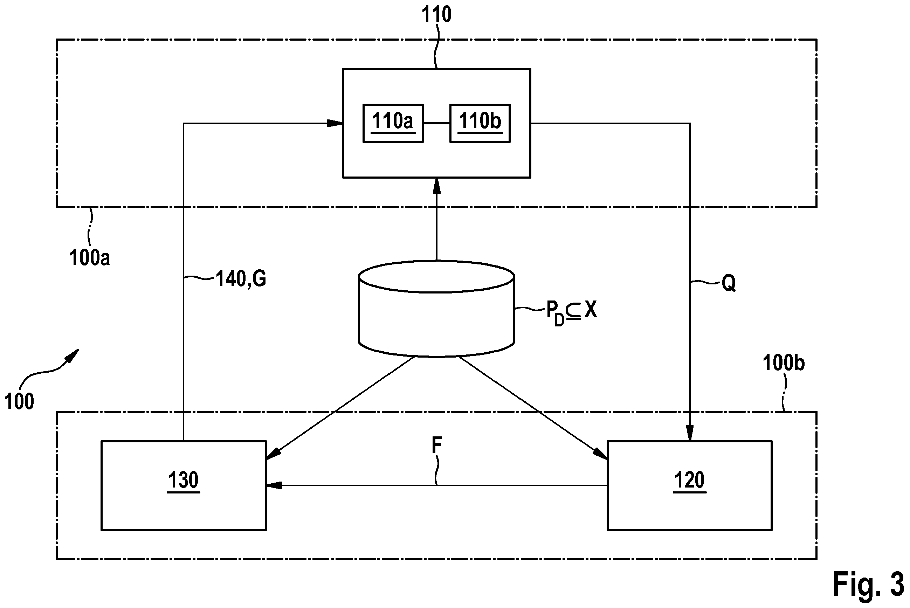

Figure 3 illustrates an exemplary embodiment of the method 100. In step 110, the encoder module Q is trained. This comprises minimizing the distance between $P_D$ and $G(Q(P_D))$ (substep 110a), as well as penalizing a divergence between $P_Q$ and $P_Z$ in Z (substep 110b).

In step 120, the critic module F is trained based on the freshly obtained training state of the encoder Q. In step 130, the decoder G is trained based on the freshly obtained training state of the critic module F. In step 140, the method 100 branches back to step 110, using the updated decoder G.

Step 110 belongs to the primal part 100a of the method 100. Steps 120 and 130 belong to the dual part 100b of the method 100.

In all of steps 110, 120 and 130, the physical training data $P_D$ is used.

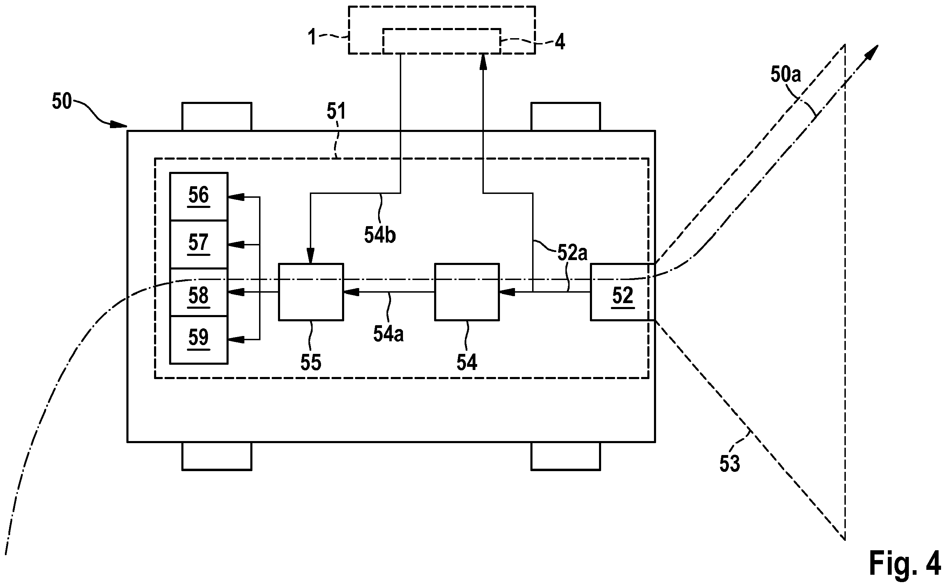

Figure 4 illustrates a vehicle 50 that benefits from the system 1 in two manners: First, the artificial intelligence module 54 in the control system and/or assistance system 51 of the vehicle 50 benefits from having been at least partially trained with training data obtained from the generating system 1. Second, physical measurement data from sensor 52, which monitors at least a part 53 of the environment of the vehicle 50, is communicated to the verification module 4 in the generating system 1. The verification module 4 checks whether, based on the current physical measurement data 52a, the physical training data $P_D$ with which the artificial intelligence module 54 has been trained is still appropriate for the current situation and/or state in which the vehicle 50 is operating.

The main purpose of the artificial intelligence module 54 is to determine whether a condition exists that necessitates a change to the trajectory 50a of the vehicle 50. If such a condition exists, this determination 54a is fed into the actuation module 55 that in turn actuates a power train 56, a steering system 57, and/or a braking system 58 of the vehicle 50, and/or causes a warning device 59 to emit a warning to the driver of the vehicle 50.

When a determination 54b is received from the verification module 4 that the physical training data $P_D$ is no longer appropriate, the actuation module may trigger the warning device 59 as well, and/or cause deactivation of the control system and/or assistance system 51.

**Claims**

1. A generating system (1) for augmenting a set $P_D$ of physical training data for an artificial intelligence module (54) in a vehicle (50) and for verifying that training data used to train the artificial intelligence module (54) is appropriate for the actual environment and/or state in which the vehicle (50) is operating, the system (1) comprising:

   • an encoder module Q, configured to map a record x sampled from the training data $P_D$ in a space X in which the training data $P_D$ was physically acquired to a latent space Z that is of lower dimensionality than the space X to produce a record Q(x) in Z;
   • a decoder module G, configured to map a record z sampled from the space Z back to the space X to produce a record G(z) in X; and
   • a critic module F, trainable or trained with the objective of most accurately classifying whether a record $\tilde{x}$ sampled from space X belongs to the set $P_D$ of physical training data or whether that record $\tilde{x}$ is a record G(z) generated by the decoder module G;

   wherein

   • the encoder module Q is trainable or trained with the objective that the distribution $P_Q$ of all generable records Q(x) in Z most closely resembles a given prior distribution $P_Z$ in Z, and the distribution of all back-mappable records G(z) that result from back-mapping records z from space Z back to space X most closely resembles the distribution of the set $P_D$ of the physical training data in X, for a fixed candidate decoder G; and
   • the decoder module G is trainable or trained with the objective that the critic module F is least able to distinguish whether a record $\tilde{x}$ sampled in X belongs to the training data $P_D$ or whether that record $\tilde{x}$ is a record G(z) generated by the decoder module G.

2. The system (1) of claim 1, wherein the encoder module Q is a probabilistic encoder that adds random noise to an otherwise deterministic mapping from x in X to Q(x) in Z.

3. The system (1) of claim 1 or 2, further comprising a physical random number generator (2) based on a source of electronic noise or radioactive decay, wherein the outcome of the random number generator (2)

   • decides which record x is to be sampled from training data $P_D$ in X.
   • decides which record $\tilde{x}$ is to be sampled from X,
   • decides which record z is to be sampled from Z, and/or
   • is used as random noise in the probabilistic encoder module Q.

4. The system (1) of any one of claims 1 to 3, wherein the encoder module Q is trainable or trained to minimize the Wasserstein distance between the distribution G(Q(x)) that results from back-mapping the generated records Q(x) back to space X and the distribution of the set $P_D$ of the physical training data in X.

5. The system (1) of any one of claims 1 to 4, wherein the encoder module Q, the decoder module G, and/or the critic module F, comprises a deep neural network.

6. The system (1) of any one of claims 1 to 5, wherein the output of the critic module F is a bounded 1-Lipschitz function with respect to a given space X and a given metric d of X.

7. The system (1) of any one of claims 1 to 6, further comprising

   • an interface (3) for reading in a record m of physical measurement data (52a) from a sensor (52) that is configured to sense at least part (53) of the environment of the vehicle (50), wherein the record m is in the same space X as the training data $P_D$; and
   • a verification module (4) that is configured to: determine whether the record Q(m) in Z that is generated by applying the encoder module Q to m is an outlier with respect to the set $Q(P_D)$ of records in Z generated by applying the encoder module Q to the training data $P_D$, and if Q(m) is an outlier, determine that the training data

$P_D$ is not appropriate for the actual environment and/or state in which the vehicle (50) is operating, whereas, if Q(m) is not an outlier, determine that the training data $P_D$ is appropriate for the actual environment and/or state in which the vehicle (50) is operating.

8. A control system and/or assistance system (51) for a vehicle (50), comprising

    • at least one sensor (52) that is configured to sense at least part (53) of the environment of the vehicle,
    • at least one artificial intelligence module (54) that is configured to infer, from the physical measurement data (52a) captured by the sensor (52), a condition that necessitates a change to the trajectory (50a) of the vehicle (50) in order to avert adverse consequences from the vehicle (50), its driver and/or other entities, and
    • an actuation module (55) that is configured to, in response to determining (54a) that the condition is present in the physical measurement data, actuate a power train (56), a steering system (57), and/or a braking system (58) of the vehicle (50), and/or cause a warning device (59) to emit a physical warning signal that is perceptible by the driver of the vehicle (50),
    • wherein the artificial intelligence module (54) is trainable or trained with training data that are at least partially generated by the generating system (1) according to any one of claims 1 to 7.

9. The control system and/or assistance system (51) of claim 8, communicatively coupled with the generating system (1) and configured to, in response to a determination (54b) by the generating system (1) that the training data $P_D$ with which the artificial intelligence module (54) has been trained is not appropriate for the actual environment and/or state in which the vehicle (50) is operating: cause a warning device (58) to emit a physical warning signal that is perceptible by the driver of the vehicle (50), and/or cause deactivation of the control system and/or assistance system (51).

10. A method (100) for manufacturing the generating system (1) of any one of claims 1 to 7, the method comprising the steps of:

    • training (110) the encoder module Q given a fixed candidate decoder module G;
    • training (120) the critic module F based on the training state of the encoder module Q obtained in the previous step (110);
    • training (130) the decoder module G based on the training state of the critic module F obtained in the previous step (120); and
    • branching back (140) to the training (110) of the encoder module Q unless a predetermined number of iterations is reached or a predetermined quality criterion for the training is fulfilled.

11. The method (100) of claim 10, wherein the encoder module Q is trained (110) based on an objective that comprises

    • minimizing (110a), over the set $P_D$ of training data and the set $Q(P_D)$ of records in Z generated by applying the encoder module Q to the training data $P_D$, the expectancy of the distance between records x in $P_D$ and records G(z) for z in $Q(P_D)$; and
    • penalizing (110b) the divergence between the distribution $P_Q$ of all generated records Q(x) in Z and the given prior distribution $P_Z$ in Z with a weighted additive term.

12. The method (100) of claim 10 or 11, wherein the critic module F is trained (120) based on an objective that comprises maximizing the absolute difference between the expectancy of F(x) for x in $P_D$ and the expectancy of F(G(z)) for z in the given prior $P_Z$.

13. The method (100) of claim 12, wherein the objective for training (120) the critic module F further comprises penalizing a deviation of the gradient of F from a uniform norm and direction on a connecting line between any two points x and G(Q(x)) in X.

14. The method (100) of any one of claims 10 to 12, wherein the decoder module G is trained (130) based on an objective that comprises minimizing the absolute difference between the expectancy between the expectancy of F(x) for x in $P_D$ and the expectancy of F(G(z)) for z in the given prior $P_Z$.

15. A computer program, comprising machine readable instructions that, when executed on a computer and/or on a control unit, upgrade the computer, and/or the control unit, to the system (1, 51) of any one of claims 1 to 9, and/or cause the computer, and/or the control unit, to perform the method (100) of any one of claims 10 to 14.

**Amended claims in accordance with Rule 137(2) EPC.**

**1.** A generating system (1) for augmenting a set $P_D$ of physical training data for an artificial intelligence module (54) and for verifying that physical training data used to train the artificial intelligence module (54) is appropriate for the actual environment and/or state in which a vehicle (50) is operating, the system (1) comprising:

• an encoder module Q, configured to map a record x sampled from the physical training data $P_D$ in a space X in which the physical training data $P_D$ was physically acquired to a latent space Z that is of lower dimensionality than the space X to produce a record Q(x) in Z;
• a decoder module G, configured to map a record z sampled from the space Z back to the space X to produce a record G(z) in X, wherein the decoder module G is configured to obtain a new sample G(z) of physical training data by applying the decoder module G to a randomly sampled record z in the lower-dimensional space Z; and
• a critic module F, trainable or trained with the objective of most accurately classifying whether a record $\tilde{x}$ sampled from space X belongs to the set $P_D$ of physical training data or whether that record $\tilde{x}$ is a record G(z) generated by the decoder module G, wherein the critic module F is trainable or trained depending on an expectation value of a norm of the gradient of the critic module F applied on uniformly distributed shifted records x minus a normalized difference between the record x and the result of the decoder module G being applied on the result of the encoder module Q being applied on the record x, wherein the gradient of the critic module F is multiplied by the result of the decoder module G being applied on the result of the encoder module Q being applied on the record x;
wherein
• the encoder module Q is trainable or trained with the objective that the distribution $P_Q$ of all generable records Q(x) in Z most closely resembles a given prior distribution $P_Z$ in Z, and the distribution of all back-mappable records G(z) back to space X most closely resembles the distribution of the set $P_D$ of the physical training data in space X, wherein the back-mappable records G(z) in space X result from back-mapping records G(z) back to records z from space Z and those records z back to space X, for a fixed decoder G; and
• the decoder module G is trainable or trained with the objective that the critic module F is least able to distinguish whether a record $\tilde{x}$ sampled in X belongs to the physical training data $P_D$ or whether that record $\tilde{x}$ is a record G(z) generated by the decoder module G.

**2.** The system (1) of claim 1, wherein the encoder module Q is a probabilistic encoder that adds random noise to an otherwise deterministic mapping from x in X to Q(x) in Z.

**3.** The system (1) of claim 1 or 2, further comprising a physical random number generator (2) based on a source of electronic noise or radioactive decay, wherein the outcome of the random number generator (2)

• decides which record x is to be sampled from physical training data $P_D$ in X.
• decides which record $\tilde{x}$ is to be sampled from X,
• decides which record z is to be sampled from Z, and/or
• is used as random noise in the probabilistic encoder module Q.

**4.** The system (1) of any one of claims 1 to 3, wherein the encoder module Q is trainable or trained to minimize the Wasserstein distance between the distribution G(Q(x)) that results from back-mapping the generated records Q(x) back to space X and the distribution of the set $P_D$ of the physical training data in X.

**5.** The system (1) of any one of claims 1 to 4, wherein the encoder module Q, the decoder module G, and/or the critic module F, comprises a deep neural network.

**6.** The system (1) of any one of claims 1 to 5, wherein the output of the critic module F fulfills constraints of a bounded 1-Lipschitz function with respect to a given space X and a given metric d of X.

**7.** The system (1) of any one of claims 1 to 6, further comprising

• an interface (3) for reading in a record m of physical measurement data (52a) from a sensor (52) that is configured to sense at least part (53) of the environment of the vehicle (50), wherein the record m is in the same space X as the physical training data $P_D$; and
• a verification module (4) that is configured to: determine whether the record Q(m) in Z that is generated by applying the encoder module Q to m is an outlier with respect to the set $Q(P_D)$ of records in Z generated by applying the encoder module Q to the physical training data $P_D$, and if Q(m) is an outlier, determine that the physical training data $P_D$ is not appropriate for the actual environment and/or state in which the vehicle (50) is operating, whereas, if Q(m) is not an outlier, determine that the physical training data $P_D$ is appropriate for the actual environment and/or state in which the vehicle (50) is operating.

8. A control system and/or assistance system (51) for a vehicle (50), comprising

   • at least one sensor (52) that is configured to sense at least part (53) of the environment of the vehicle,
   • at least one artificial intelligence module (54) that is configured to infer, from the physical measurement data (52a) captured by the sensor (52), a condition that necessitates a change to the trajectory (50a) of the vehicle (50) in order to avert adverse consequences from the vehicle (50), its driver and/or other entities, and
   • an actuation module (55) that is configured to, in response to determining (54a) that the condition is present in the physical measurement data, actuate a power train (56), a steering system (57), and/or a braking system (58) of the vehicle (50), and/or cause a warning device (59) to emit a physical warning signal that is perceptible by the driver of the vehicle (50),
   • wherein the artificial intelligence module (54) is trainable or trained with training data that are at least partially generated by the generating system (1) according to any one of claims 1 to 7.

9. The control system and/or assistance system (51) of claim 8, communica-tively coupled with the generating system (1) and configured to, in response to a determination (54b) by the generating system (1) that the physical training data $P_D$ with which the artificial intelligence module (54) has been trained is not appropriate for the actual environment and/or state in which the vehicle (50) is operating: cause a warning device (58) to emit a physical warning signal that is perceptible by the driver of the vehicle (50), and/or cause deactivation of the control system and/or assistance system (51).

10. A method (100) for training the generating system (1) of any one of claims 1 to 7, the method comprising the steps of:

    • training (110) the encoder module Q given a fixed candidate decoder module G;
    • training (120) the critic module F based on the training state of the encoder module Q obtained in the previous step (110);
    • training (130) the decoder module G based on the training state of the critic module F obtained in the previous step (120); and
    • branching back (140) to the training (110) of the encoder module Q unless a predetermined number of iterations is reached or a predetermined quality criterion for the training is fulfilled.

11. The method (100) of claim 10, wherein the encoder module Q is trained (110) based on an objective that comprises

    • minimizing (110a), over the set $P_D$ of physical training data and the set $Q(P_D)$ of records in Z generated by applying the encoder module Q to the physical training data $P_D$, the expectancy of the distance between records x in $P_D$ and records G(z) for z in $Q(P_D)$; and
    • penalizing (110b) the divergence between the distribution $P_Q$ of all generated records Q(x) in Z and the given prior distribution $P_Z$ in Z with a weighted additive term.

12. The method (100) of claim 10 or 11, wherein the critic module F is trained (120) based on an objective that comprises maximizing the absolute difference between the expectancy of F(x) for x in $P_D$ and the expectancy of F(G(z)) for z in the given prior Pz.

13. The method (100) of claim 12, wherein the objective for training (120) the critic module F further comprises penalizing a l_2 norm of the deviation of the gradient of F minus a normalized difference between any two points x in $P_D$ and G(Q(x)) in X.

14. The method (100) of any one of claims 10 to 12, wherein the decoder module G is trained (130) based on an objective that comprises minimizing the absolute difference between the expectancy of F(x) for x in $P_D$ and the expectancy of F(G(z)) for z in the given prior $P_Z$.

15. A computer program, comprising machine readable instructions that, when executed on a computer and/or on a control unit, causes the computer, and/or the control unit, to the system (1, 51) of any one of claims 1 to 9, to perform the method (100) of any one of claims 10 to 14.

Fig. 1

Fig. 2

Fig. 3

Fig. 4

Europäisches
Patentamt

European
Patent Office

Office européen
des brevets

**EUROPEAN SEARCH REPORT**

Application Number

EP 18 17 3889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Diederik Greveling: "Modelling human driving behaviour using Generative Adversarial Networks", <br><br>25 January 2018 (2018-01-25), XP055524483, Retrieved from the Internet: URL:http://fse.studenttheses.ub.rug.nl/16431/1/Thesis_Final_DP_Greveling_s2065894.pdf [retrieved on 2018-11-16] * abstract * * Sections 3.4 and 4 * ----- | 1,2,4-6, 15 | INV. G06N5/02 G06K7/10 |
| X | Xu Chen ET AL: "Training Generative Adversarial Networks via Primal-Dual Subgradient Methods: A Lagrangian Perspective on GAN", <br><br>5 February 2018 (2018-02-05), XP055524229, Retrieved from the Internet: URL:https://arxiv.org/pdf/1802.01765.pdf * abstract * * Sections 1, 3.1-3.3 * ----- | 1,2,4-6, 15 | |
| X | Ilya Tolstikhin: "Implicit generative models: dual vs. primal approaches Contents", <br><br>30 June 2017 (2017-06-30), XP055524180, Retrieved from the Internet: URL:http://mlss.tuebingen.mpg.de/2017/speaker_slides/Ilya.pdf [retrieved on 2018-11-15] * pp. 4, 6, 15, 21-23 * ----- <br><br>-/-- | 1,2,4-6, 15 | TECHNICAL FIELDS SEARCHED (IPC) <br><br> G06F G06N G06K |

~~The present search report has been drawn up for all claims~~

| Place of search | Date of completion of the search | Examiner |
|---|---|---|
| The Hague | 11 March 2019 | Grigorescu, Simona |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 18 17 3889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Martin Arjovsky ET AL: "Wasserstein GAN", , 26 January 2017 (2017-01-26), XP055524182, Retrieved from the Internet: URL:https://arxiv.org/pdf/1701.07875.pdf * Section 3 * | 1,2,4-6, 15 | |
| X | ARNA GHOSH ET AL: "SAD-GAN: Synthetic Autonomous Driving using Generative Adversarial Networks", ARXIV.ORG, CORNELL UNIVERSITY LIBRARY, 201 OLIN LIBRARY CORNELL UNIVERSITY ITHACA, NY 14853, 27 November 2016 (2016-11-27), XP080734796, * abstract; figures 1,2,3 * * Section 2.2 * | 1,2,4-6, 15 | |
| L | MEVLANA GEMICI ET AL: "Primal-Dual Wasserstein GAN", ARXIV.ORG, CORNELL UNIVERSITY LIBRARY, 201 OLIN LIBRARY CORNELL UNIVERSITY ITHACA, NY 14853, 24 May 2018 (2018-05-24), XP080881905, * the whole document * | 1,2,4-6, 10-15 | TECHNICAL FIELDS SEARCHED (IPC) |
| X | NGOC-TRUNG TRAN ET AL: "Generative Adversarial Autoencoder Networks", ARXIV.ORG, CORNELL UNIVERSITY LIBRARY, 201 OLIN LIBRARY CORNELL UNIVERSITY ITHACA, NY 14853, 23 March 2018 (2018-03-23), XP080862373, * abstract; figure 3 * * Section 3.2 and Algorithm 1 * | 1,10-15 | |

-/--

~~The present search report has been drawn up for all claims~~

| Place of search | Date of completion of the search | Examiner |
|---|---|---|
| The Hague | 11 March 2019 | Grigorescu, Simona |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 18 17 3889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ishaan Gulrajani ET AL: "Improved Training of Wasserstein GANs", , 25 December 2017 (2017-12-25), XP055524184, Retrieved from the Internet: URL:https://arxiv.org/pdf/1704.00028.pdf [retrieved on 2018-11-15] * Sections 1, 2.2 * ----- | 1,2,4-6, 10-15 | |
| A | BO ZHAO ET AL: "Modular Generative Adversarial Networks", ARXIV.ORG, CORNELL UNIVERSITY LIBRARY, 201 OLIN LIBRARY CORNELL UNIVERSITY ITHACA, NY 14853, 10 April 2018 (2018-04-10), XP080869199, * Section 4 * ----- | 13 | |

TECHNICAL FIELDS
SEARCHED      (IPC)

~~The present search report has been drawn up for all claims~~

| Place of search | Date of completion of the search | Examiner |
|---|---|---|
| The Hague | 11 March 2019 | Grigorescu, Simona |

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1, 2, 4-6, 10-14(completely); 15(partially)

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

## LACK OF UNITY OF INVENTION
## SHEET B

Application Number

EP 18 17 3889

The Search Division considers that the present European patent application does not comply with the requirements of unity of invention and relates to several inventions or groups of inventions, namely:

```
1. claims: 1, 2, 4-6(completely); 15(partially)

     Generating training data
                    ---

2. claims: 3(completely); 15(partially)

     Generation of random numbers
                    ---

3. claims: 7(completely); 15(partially)

     Training data verification.
                    ---

4. claims: 8, 9(completely); 15(partially)

     Intelligent control system for a vehicle
                    ---

5. claims: 10-14(completely); 15(partially)

     GAN training method
                    ---
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8682821 B2